# EUROPÄISCHE PATENTANMELDUNG

(11) **EP 4 810 834 A1**
(43) Veröffentlichungstag der Anmeldung: **23.09.2026**
(21) Anmeldenummer: 25164995.0
(22) Anmeldetag: 20.03.2025
(51) Int. Cl.: F16K 5/04, F16K 5/12, F16K 11/085

(54) **ARMATUR**

(71) Anmelder: Watts Industries Deutschland GmbH, 76829 Landau (DE)
(72) Erfinder: HANS, Heribert, 67480 Edenkoben (DE); CATTARIUS, Marco, 76857 Albersweiler (DE)
(74) Vertreter: Patentanwälte Dr. Keller, Schwertfeger Partnerschaft mbB

(57) **Zusammenfassung**

Die vorliegende Erfindung betrifft eine Armatur, umfassend ein Gehäuse (12) mit einer Kammer (14) im Inneren des Gehäuses (12), wobei die Kammer (14) eine Kammerwand aufweist, in der wenigstens zwei Öffnungen (15) vorgesehen sind, und ein Absperrelement (30; 130; 230; 330), das im Inneren der Kammer (14) drehbar gelagert und ausgelegt ist, wenigstens eine Öffnung (15) der wenigstens zwei Öffnungen (15) zumindest abschnittsweise zu verschließen, wobei das Absperrelement (30; 130; 230; 330) einen Absperrkörper (32; 132; 332) und ein Absperrsegment (34; 134; 234; 334) mit einer Absperrfläche aufweist und wobei das Absperrsegment (34; 134; 234; 334) beweglich mit dem Absperrkörper (32; 132; 332) verbunden ist.

## Beschreibung

Die vorliegende Erfindung betrifft eine Armatur nach dem Oberbegriff des Anspruchs 1.

Armaturen werden allgemein zur Regelung und Steuerung des Flusses von Fluiden, insbesondere Wasser verwendet. Die Einsatzbereiche von Armaturen sind daher sehr vielfältig. Eine besondere Form der Armaturen sind Verteiler- und/oder Mischarmaturen, insbesondere Mischventile wie etwa Drei-Wege-Mischer oder Vier-Wege-Mischer.

Der Drei-Wege-Mischer dient beispielsweise dazu, zwei Flüssigkeitsströme unterschiedlicher Temperaturen in einer Anlage so zu mischen, dass am Ausgang des Drei-Wege-Mischers die Flüssigkeit eine gewünschte Mischtemperatur aufweist. Anlagen oder Systeme, in denen solche Drei-Wege-Mischer eingesetzt werden, umfassen somit eine erste Zufuhrleitung und eine zweite Zufuhrleitung, die jeweils in die Armatur münden, wobei in der ersten Zufuhrleitung eine Flüssigkeit mit hoher Temperatur und in der zweiten Zufuhrleitung eine Flüssigkeit mit geringer Temperatur geführt wird, sowie eine Ausgangsleitung, die mit dem Drei-Wege-Mischer verbunden ist. Der Drei-Wege-Mischer umfasst eine Mischkammer mit wenigstens drei Öffnungen, nämlich zwei Einlässen und einem Auslass, wobei die zwei Einlässe mit jeweils einer Zufuhrleitungen der Anlage und der Auslass mit der Ausgangsleitung verbunden sind. Im Inneren der Mischkammer befindet sich ein Absperrelement, auch Mischerküken genannt, welches drehbar gelagert ist, um die Zufuhrleitungen in die Mischkammer gezielt zu verschließen oder ganz oder teilweise zu öffnen. Drei-Wege-Mischer werden unter anderem in Warmwasserheizungsanlagen eingesetzt.

Eine Armatur, die als Drei-Wege-Mischer arbeitet, kann im Übrigen auch als Verteiler verwendet werden. In diesem Fall sind die Öffnungen der Mischkammer mit einer Zulaufleitung und zwei Ausgangsleitungen verbunden, so dass der Verteiler einen Einlass und zwei Auslässe aufweist.

Bei Armaturen mit einem drehbaren Absperrelement besteht die Herausforderung einerseits eine Öffnung in der Gehäusewand fluiddicht zu verschließen und andererseits eine reibungs- und verschleißarme Drehung des Absperrelements zu ermöglichen. Diese zwei Herausforderungen widersprechen sich jedoch, da für ein fluiddichtes Verschließen kein Abstand und somit kein Spiel zwischen dem Absperrelement und der die Öffnung umgebenden Gehäusewand erwünscht sind. Eine reibungs- und verschleißarme Drehung des Absperrelements wird jedoch gerade dadurch erreicht, dass zwischen der Gehäusewand und dem Absperrelement ein geringer Abstand vorhanden ist, so dass das Absperrelement nicht an der Gehäusewand reibt.

Da ein wesentliches Qualitätskriterium einer Armatur die Dichtheit einer Armatur ist, ist der Fachmann daher geneigt, den Abstand zwischen Kammerwand und Absperrelement möglichst gering zu halten. Während des Gebrauchs der Armatur lagern sich jedoch Verunreinigungen, die sich beispielsweise in dem durch die Armatur strömenden Fluid befinden, an verschiedenen Stellen der Armatur an. Solche Verunreinigungen können sich unter anderem an der Kammerwand oder dem Absperrelement ablagern, so dass der freie Abstand zwischen Kammerwand und Absperrelement zumindest abschnittsweise verringert wird. Der freie Abstand kann aufgrund der abgelagerten Verunreinigungen an manchen Stellen so gering werden, dass das Absperrelement an der Kammerwand reibt, was zu einem erschwerten Drehen des Absperrelements bis hin zum völligen Blockieren des Absperrelements führt.

Spätestens dann, wenn das Absperrelement blockiert ist, ist eine Reinigung, Reparatur oder sogar ein Austausch der Armatur notwendig, falls eine Reinigung oder Reparatur nicht mehr möglich ist. Die Reinigung, Reparatur oder der Austausch einer Armatur sind mit unerwünschten Kosten und Aufwand verbunden.

Es ist Aufgabe der vorliegenden Erfindung, eine Armatur mit einer Kammer, in der ein drehbares Absperrelement gelagert ist, bereitzustellen, welche einfach zu betätigen ist eine sehr hohe Dichtheit aufweist. Darüber hinaus ist es Aufgabe der vorliegenden Erfindung eine Armatur mit einer Kammer, in der ein drehbares Absperrelement gelagert ist, bereitzustellen, die eine höhere Standzeit als bisher bekannte Armaturen aufweist und bei welcher die Möglichkeit besteht, im Falle einer Blockade das Absperrelement einfach zu reinigen oder zu reparieren.

Erfindungsgemäß wird die Aufgabe gelöst durch eine Armatur umfassend ein Gehäuse mit einer Kammer im Inneren des Gehäuses, wobei die Kammer eine Kammerwand aufweist, in der wenigstens zwei Öffnungen vorgesehen sind, und ein Absperrelement, das im Inneren der Kammer drehbar gelagert ist und ausgelegt ist, wenigstens eine Öffnung der wenigstens zwei Öffnungen zumindest abschnittsweise zu verschließen, wobei das Absperrelement einen Absperrkörper und ein Absperrsegment mit einer Absperrfläche aufweist und wobei das Absperrsegment beweglich mit dem Absperrkörper verbunden ist.

Unter Absperrfläche wird hier die Fläche des Absperrelements verstanden, die ausgelegt ist, wenigstens eine Öffnung in der Kammerwand zur Regelung des Durchflusses bestimmungsgemäß zu verschließen. Die Absperrfläche ist vorzugsweise komplementär zur Kammerwand ausgebildet, in der sich die Öffnung befindet.

Das Vorsehen eines gegenüber dem Absperrkörper beweglichen Absperrsegments hat den Vorteil, dass in dem Fall, in dem Verunreinigungen den Abstand zwischen Absperrelement und Kammerwand verkleinern, das Absperrsegment eine Relativbewegung durchführen kann, so dass eine Blockade zwischen Absperrelement und Kammerwand vermieden werden kann.

Prinzipiell kann die Relativbewegung des Absperrsegments bezüglich des Absperrkörpers parallel zur Kammerwand erfolgen. Es ist jedoch von Vorteil, dass die Bewegung des Absperrsegments in Bezug auf den Absperrkörper senkrecht zur Fläche der Kammerwand erfolgt, wodurch der Abstand zwischen Absperrelement und Kammerwand vergrößert werden kann, um beispielsweise einer Ablagerung aufgrund einer Verunreinigung auszuweichen.

Da das Absperrelement üblicherweise eine kreisförmige Drehbewegung durchführt, ist es somit von Vorteil, dass das Absperrsegment in radialer Richtung gegenüber dem Absperrkörper verlagerbar, insbesondere verschiebbar ist.

Aufgrund der vorgesehenen Beweglichkeit umfasst das Absperrelement somit eine erste Stellung, in der der Absperrkörper und das Absperrsegment im Grundzustand sind und einen ersten Abstand zueinander aufweisen. In diesem Zustand liegt das Absperrsegment dichtend an der Kammerwand an. In einer zweiten Stellung sind das Absperrsegment und der Absperrkörper gegeneinander verschoben und weisen einen zweiten Abstand zueinander auf, der kleiner als der erste Abstand ist.

Um von einer zweiten Stellung wieder in die erste Stellung zurück zu gelangen, ist es von Vorteil, dass zwischen Absperrkörper und Absperrsegment wenigstens ein Rückstellelement vorgesehen ist.

Bei einer bevorzugten Ausführungsform ist das wenigstens eine Rückstellelement ein Federelement. Das Federelement sorgt hier einerseits dafür, dass das Absperrsegment im eingebauten Zustand in der ersten Stellung immer gegen die Kammerwand gedrückt wird, um möglichst dichtend an der Kammerwand anzuliegen. Das Federelement bietet jedoch andererseits die Möglichkeit, dass es im Falle einer Drehbewegung des Absperrelements zusammengedrückt werden kann. Dies ist insbesondere dann von Vorteil, wenn zwischen Kammerwand und Absperrsegment Verunreinigungen oder Ablagerungen vorhanden sind, so dass die Drehbewegung des Absperrelements behindert oder sogar blockiert ist. Wird das Federelement zusammengedrückt, befindet sich das Absperrelement in der zweiten Stellung, wodurch der Abstand zwischen Kammerwand und Absperrsegment vergrößert ist, so dass das Absperrelement einfach an einer Verunreinigung entlanggleiten kann, ohne davon blockiert zu werden.

Das Federelement kann insbesondere eine Druckfeder sein oder mehrere Druckfedern umfassen. Beispielsweise kann die Druckfeder die Form einer Spiralfeder aufweisen.

Für eine hohe Dichtheit ist es erforderlich, dass das Absperrelement über die gesamte Fläche des Absperrbereichs an der Kammerwand anliegt. Um die von dem Rückstellelement ausgeübte Kraft möglichst gleichmäßig auf das Absperrsegment, insbesondere auf den Absperrbereich zu verteilen, ist es von Vorteil, dass die vom Rückstellelementausgeübte Kraft am Rand des Absperrbereichs des Absperrsegments angreift. Dies lässt sich beispielsweise dadurch realisieren, dass das Rückstellelement mehrere Spiralfedern aufweist, die zwischen Absperrkörper und Absperrsegment vorzugsweise am Rand des Absperrsegments angeordnet sind.

Besonders vorteilhaft ist jedoch eine Ausführungsform, bei der das wenigstens eine Rückstellelement ein Federelement ist, das in Form einer Wellenfeder ausgebildet ist. Bei geeigneter Wahl der Größe und Positionierung der Wellenfeder lässt sich bereits mit Hilfe einer einzigen Wellenfeder das Absperrsegment gleichmäßig an die Kammerwand andrücken. Eine Wellenfeder weist einen Mittelpunkt und einen Durchmesser auf. Besonders vorteilhaft ist es daher, wenn sich der Mittelpunkt der Wellenfeder im inneren Bereich des Absperrbereichs um den Mittelpunkt des Absperrbereichs herum oder sogar direkt im Mittelpunkt des Absperrbereichs befindet und der Durchmesser der Wellenfeder so gewählt ist, dass die Wellenfeder im Randbereich des Absperrbereichs anliegt. Die Wellenfeder kann einlagig oder mehrlagig ausgebildet sein. Es ist jedoch von Vorteil, dass die Wellenfeder einlagig ausgebildet ist.

Alternativ kann das wenigstens eine Rückstellelement ein elastisches Bauteil aus einem Elastomer wie etwa ein Gummipuffer sein. Beispielsweise kann der Gummipuffer als Scheibe oder als Ring ausgebildet sein.

Für den Fall, dass die Absperrfläche aufgrund von Reibung an Verunreinigungen an der Kammerwand beschädigt ist oder selbst verunreinigt ist, ist es von Vorteil, dass der Absperrkörper und das Absperrsegment lösbar, insbesondere mittels einer Steckverbindung miteinander verbunden sind. Hierdurch ist es möglich, nur das verunreinigte oder beschädigte Absperrsegment auszutauschen oder zu reinigen. Der Absperrkörper und das Absperrsegment sind hier somit als zwei trennbare Bauteile ausgebildet.

Bei einer bevorzugten Ausführungsform ist die Kammer zylinderförmig ausgebildet, wobei sich die wenigstens zwei Öffnungen in der Mantelfläche der Kammerwand der Kammer befinden. Die Absperrfläche ist komplementär zu der zylinderförmig gebogenen Kammerwand der Kammer ausgebildet und weist somit einen kreisbogenförmigen Querschnitt auf, wobei der Krümmungsradius der Absperrfläche gleich oder geringfügig kleiner ist als der Radius der Kammer. Idealerweise ist für eine optimale Abdichtung wenigstens einer der wenigstens zwei Öffnungen in einem geschlossenen Zustand der Krümmungsradius der Absperrfläche gleich dem Radius der Kammer.

Bei dieser Ausführungsform ist es besonders von Vorteil, dass das Absperrsegment die Grundform einer gebogenen Platte aufweist.

Der Winkelbereich, den der Absperrbereich des Absperrelements bedeckt, ist abhängig von dem gewählten Gehäuse und der Anzahl der im Gehäuse vorhandenen Öffnungen. Bei einem Gehäuse mit vier gleichmäßig um den Umfang verteilten Öffnungen, liegt der Winkelbereich, den der Absperrbereich des Absperrelements bedeckt, vorzugsweise im Bereich von 80° bis 100°. Bei einem Gehäuse mit drei gleichmäßig um den Umfang verteilten Öffnungen, kann der Winkelbereich, den der Absperrbereich des Absperrelements bedeckt, im Bereich von 80° bis 130° liegen.

Um Toträume im Inneren der Kammer zu vermeiden, weist das Absperrelement Anströmflächen auf, die sich vorzugsweise in radialer Richtung erstrecken. Beispielsweise bilden die Anströmfläche und die Absperrfläche im Querschnitt einen Kreissektor.

Bei der Auswahl einer geeigneten Armatur, die eine Ventilfunktion wie etwa ein Drei-Wege-Mischer oder ein Vier-Wege-Mischer aufweist, spielen der maximal mögliche Durchfluss und der Druckverlust, welcher beim Durchgang eines Fluids, insbesondere Wasser, durch die Armatur entsteht, eine wichtige Rolle. Aus diesem Grund wurde der Kvs-Wert eingeführt.

Der Kv-Wert wird als Durchflussfaktor oder Durchflusskoeffizient bezeichnet. Er ist ein Maß für den erzielbaren Durchfluss einer Flüssigkeit oder eines Gases durch eine Ventil. Der Kv-Wert wird auch als effektiver Querschnitt interpretiert. Der Kv-Wert wird im Zusammenhang mit dem entsprechenden Öffnungsgrad eines Ventils angegeben. Armaturen, die als Ventil arbeiten, werden daher mit dem Kv-Wert beschrieben. Der Kv-Wert einer als Ventil arbeitenden Armatur bei 100% Öffnungsgrad und 1 bar Druckdifferenz wird als Kvs-Wert bezeichnet. Der Kvs-Wert gibt somit den maximalen möglichen Durchsatz einer als Ventil arbeitenden Armatur bei 1 bar Druckdifferenz an.

Bei einer bevorzugten Ausführungsform weist das Absperrsegment einen Absperrbereich mit einer Absperrfläche und wenigstens ein Ansatzstück auf, das sich seitlich über den Absperrbereich hinaus erstreckt und wobei in dem Ansatzstück eine Aussparung vorgesehen ist.

Unter dem Absperrbereich des Absperrelements wird der Bereich verstanden, der ausgelegt ist, wenigstens eine Öffnung in der Kammerwand zur Regelung des Durchflusses bestimmungsgemäß zu verschließen, insbesondere vollständig zu verschließen.

Die Außenseite des Absperrsegments im Bereich des Absperrbereichs bildet die Absperrfläche, wobei die Kontur der Außenseite des Absperrsegments im Bereich des Absperrbereich vorzugsweise komplementär zu der Kammerwand geformt ist.

Das Ansatzstück erstreckt sich seitlich über den Absperrbereich hinaus, wobei hier seitlich so zu verstehen ist, dass sich das Ansatzstück in Drehrichtung oder entgegengesetzt zur Drehrichtung das Absperrelements erstreckt. Vorteilhafterweise ist das Ansatzstück parallel zur Kammerwand ausgerichtet.

Das Ansatzstück kann unter anderem dazu dienen, eine Öffnung im Zusammenhang mit der Einstellung eines bestimmten Mischungsverhältnisses teilweise zu verschließen. Die Hauptaufgabe des Ansatzstücks ist es jedoch wenigstens eine Öffnung der Kammerwand zu verengen, insbesondere den Durchmesser der Öffnung zur reduzieren, um den aufgrund der Öffnungen des Gehäuses vorgegebenen Kvs-Wert der Armatur zu verändern. Ihre Wirkung ist die einer Blende.

Der Absperrbereich ist somit ausgelegt, in der Armatur in einem gewünschten Betriebszustand eine der wenigstens zwei Öffnungen ganz oder teilweise zu verschließen, während das Ansatzstück den Durchmesser der anderen der wenigstens zwei Öffnungen reduziert. Das Ansatzstück und der Absperrbereich wirken in einer vorgegebenen Betriebsstellung somit auf zwei verschiedene Öffnungen.

Mithilfe des Ansatzstückes besteht daher die Möglichkeit den Kvs-Wert einer gegebenen Armatur zu ändern.

Vorzugsweise weisen die wenigstens zwei Öffnungen jeweils eine Öffnungsfläche und die Aussparung eine Aussparungsfläche auf, wobei wenigstens eine Öffnungsfläche größer als die Aussparungsfläche ist.

Liegt bei einer gegebenen Armatur das Ansatzstück an einer der wenigstens zwei Öffnungen in der Art einer Blende an, so wird der ursprüngliche Öffnungsquerschnitt der wenigstens einen Öffnung verringert, so dass hierdurch ein geringerer Kvs-Wert für die gegebene Armatur eingestellt werden kann.

Die Öffnungsfläche der Öffnungen in der Kammerwand des Gehäuses gibt somit den maximal möglichen Kvs-Wert für ein Gehäuse und somit für die Armatur an. Mittels des Ansatzstückes und insbesondere mittels der Größe und/oder der Form der Aussparung lässt sich der Kvs-Wert einer Armatur auf niedrigere Werte einstellen.

Dies führt dazu, dass bei allen oder mehreren Armaturen eines Armaturensatzes mit unterschiedlichen Kvs-Werten das gleiche Gehäuse verwendet werden kann. Insbesondere kann dadurch eine Gehäuseart mit einem gegebenen Öffnungsdurchmesser in Anwendungsbereichen mit unterschiedlichen Kvs-Werten eingesetzt werden, da nicht das Gehäuse verändert werden muss, sondern nur der Austausch des Absperrelements notwendig ist. Dies führt zu einer vereinfachten Produktion, da die Produktion auf ein oder wenige Gehäusearten unterschiedlicher Größe reduziert werden kann und nur noch unterschiedliche Absperrelemente bereitgestellt werden müssen.

Bei einer Ausführungsform kann die Aussparung ein Durchgang in dem Ansatzstück sein, beispielsweise in Form einer Bohrung durch das Ansatzstück. Alternativ kann das Ansatzstück eine freie Seite aufweisen und die Aussparung ist eine Vertiefung, die in die freie Seite mündet. Beispielsweise kann die Aussparung teilkreisförmig oder in Form von schmalen oder breiten Schlitzen bzw. Kerben ausgebildet sein. Die freie Seite kann die Seite sein, die entgegengesetzt zu dem Absperrbereich liegt.

Bei einer bevorzugten Ausführungsform weist das wenigstens eine Ansatzstück eine Außenfläche auf, die flächenbündig mit der Absperrfläche ausgerichtet ist. Dies hat den Vorteil, dass beim Drehen des Absperrelements keine Toträume entstehen, in denen sich Fluid sammeln kann.

Bei einer bevorzugten Ausführungsform sind ein erstes Ansatzstück und ein zweites Ansatzstück vorgesehen, wobei das erste Ansatzstück an der ersten Seite des Absperrbereichs sich seitlich über die Absperrfläche hinaus erstreckt und das zweite Ansatzstück an einer der ersten Seite entgegengesetzt liegenden zweiten Seite des Absperrbereichs sich über den Absperrbereich hinaus erstreckt. Diese Ausführungsform ist besonders bei Armaturen von Vorteil, die drei oder mehr Öffnungen aufweisen, wobei zumindest zwei Öffnungen als Einlässe ausgebildet sind und benachbart zueinander angeordnet sind, wie etwa bei einem Drei-Wege-Mischer.

Bei dieser Art von Armaturen kann das Absperrelement sowohl im Uhrzeigersinn als auch gegen den Uhrzeigersinn gedreht werden, so dass der Absperrbereich des Absperrelements abwechselnd zwei benachbart angeordnete Öffnungen vollständig bedecken kann. Um sicher zu stellen, dass die dann jeweils geöffnete Öffnung von einem Ansatzstück bedeckt wird, um den maximalen Durchfluss durch die Öffnung zu reduzieren, sind beidseitig des Absperrelements entsprechende Ansatzstücke vorgesehen. Hierbei sind das erste Ansatzstück und das zweite Ansatzstück vorzugsweise spiegelbildlich zueinander ausgebildet. Es besteht jedoch auch die Möglichkeit, das erste Ansatzstück und das zweite Ansatzstück unterschiedlich auszubilden.

Das beschriebene Absperrelement ist bei einer Vielzahl von Armaturen mit einem Einlass und einem Auslass einsetzbar. Insbesondere ist das beschriebene Absperrelement jedoch bei einem Verteiler oder einem Ventil, wie etwa einem Drei-Wege-Mischer oder einem anderen Verteiler mit drei oder mehr Anschlüssen verwendbar.

Bevorzugte Ausführungsformen werden anhand der beigefügten Zeichnungen näher erläutert, in denen zeigen:
- Fig. 1: einen Drei-Wege-Mischer in einer perspektivischen Ansicht,
- Fig. 2: das Gehäuse des Drei-Wege-Mischers in einer perspektivischen Ansicht,
- Fig. 3: einen Querschnitt durch den in Fig. 1 dargestellten Drei-Wege-Mischer,
- Fig. 4: eine erste perspektivische Ansicht eines Absperrelements gemäß einer ersten Ausführungsform,
- Fig. 5: eine Seitenansicht des Absperrelements der Fig. 4,
- Fig. 6: eine weitere Ansicht des in Fig. 4 dargestellten Absperrelements,
- Fig. 7: der in Fig. 1 dargestellte Drei-Wege-Mischer mit dem in den Figuren 4 bis 6 dargestellten Absperrelement in teilweise zerlegter Darstellung,
- Fig. 8: das in den Figuren 4 bis 6 dargestellte Absperrelement in zerlegter Darstellung in perspektivischer Ansicht,
- Fig. 9: das in den Figuren 4 bis 6 dargestellte Absperrelement in zerlegter Darstellung in einer Draufsicht,
- Fig.10: das Absperrsegment in einer Ansicht von hinten,
- Fig. 11: eine Draufsicht auf das in den Figuren 4 bis 6 dargestellte Absperrelement mit verdeckten Kanten,
- Fig. 12: eine zweite Ausführungsform eines Absperrelements in perspektivischer Ansicht,
- Fig. 13: eine Seitenansicht des in Fig. 12 dargestellten Absperrelements,
- Fig. 14: eine zweite Ansicht des in Fig. 12 dargestellten Absperrelements,
- Fig. 15: die wesentlichen Bestandteile eines Armaturensatzes,
- Fig. 16: den in Fig. 15 gezeigten Armaturensatz mit weiteren Bestandteilen,
- Fig. 17: einen Querschnitt durch den in Fig. 1 dargestellten Drei-Wege-Mischer in einer ersten Betriebsstellung,
- Fig. 18: einen Querschnitt durch den in Fig. 1 dargestellten Drei-Wege-Mischer in einer zweiten Betriebsstellung,
- Fig. 19: eine dritte Ausführungsform eines Absperrelements in zerlegter Darstellung in einer Ansicht von vorne und
- Fig. 20: die in Fig. 19 dargestellte Ausführungsform eines Absperrelements in zerlegter Darstellung in einer Ansicht von hinten.

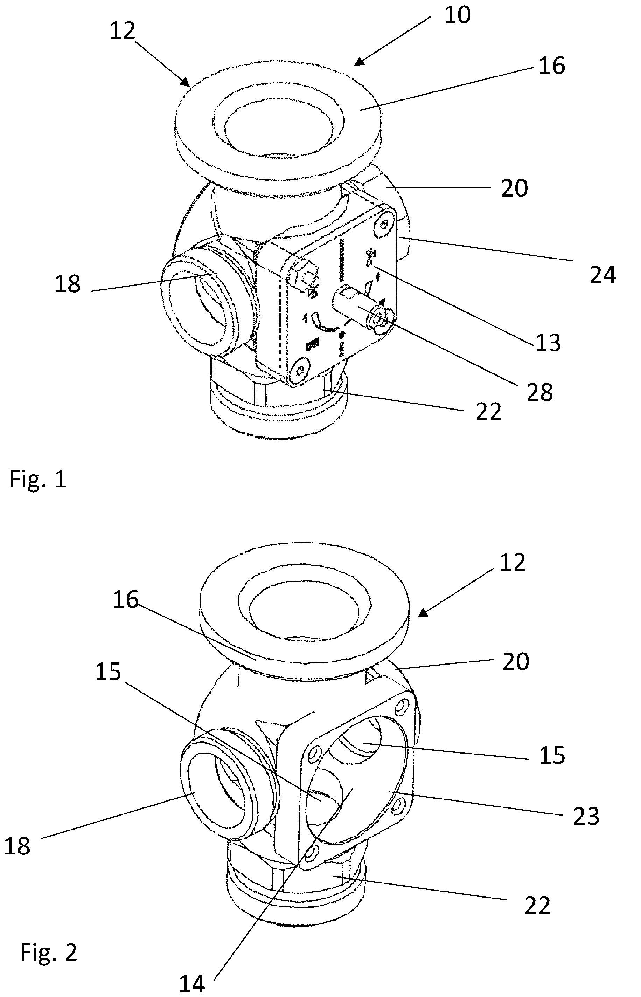

In Figur 1 ist ein Drei-Wege-Mischer 10 in einer perspektivischen Ansicht von außen gezeigt.

Der Drei-Wege-Mischer 10 umfasst ein Gehäuse 12, ein Aufnahmeelement 13, auf welches eine Verstellvorrichtung mit einem Motor oder mit einem mechanischen Hebel montiert werden kann, und ein im Inneren des Gehäuse 12 befindliches Absperrelement, welches weiter unten im Detail beschrieben wird.

Das Gehäuse 12 des in Fig. 1 dargestellten Drei-Wege-Mischer 10 ohne Aufnahmeelement 13 und ohne Absperrelement ist in Fig. 2 gezeigt.

Wie insbesondere Figur 2 zeigt, besitzt das Gehäuse 12 im Inneren eine zylindrische Mischkammer 14. Entlang des Umfangs der Mischkammer 14 befinden sich jeweils im Abstand von 90° vier Öffnungen 15, in die Anschlüsse 16, 18, 20, 22 münden. Von den vier Öffnungen 15 sind in Fig. 2 nur zwei zu erkennen.

Das Gehäuse 12 eignet sich für die Verwendung als Drei-Wege-Mischer oder auch als Verteiler mit vier Anschlüssen. Die einzelnen Anschlüsse 16, 18, 20, 22 können daher je nach Bedarf als Einlass oder Auslass verwendet werden. Falls nicht benötigt, können einzelne Anschlüsse auch verschlossen werden. Dies ist insbesondere bei der Verwendung des Gehäuses 12 für einen Drei-Wege-Mischer gegeben. Die entgegengesetzt voneinander liegenden Anschlüsse 18 und 20 des Gehäuses 12 sind im Übrigen baugleich, so dass das Gehäuse 12 für einen linksseitigen und einen rechtsseitigen Drei-Wege-Mischer eingesetzt werden kann, indem je nach Anforderung einer der beiden entgegengesetzt liegenden Anschlüsse 18, 20 verschlossen wird.

Wenn auch nicht zu erkennen, so ist die Mischkammer 14 an ihrer Unterseite verschlossen. An der Oberseite befindet sich eine weitere Öffnung 23, die mittels des Aufnahmeelements 13 verschließbar ist.

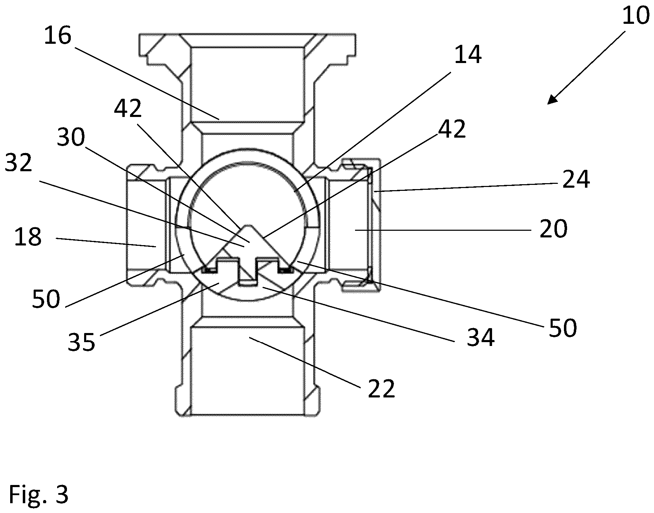

In Fig. 3 ist der Drei-Wege-Mischer 10 im Querschnitt dargestellt. Bei dieser Ausführungsform dienen die Rohrleitungsanschlüsse 18, 22 als Einlass für ein Fluid wie etwa Wasser, der Rohrleitungsanschluss 16 als Auslass. Der Rohrleitungsanschluss 20 ist mittels der Abdeckkappe 24 verschlossen.

Im Inneren der Mischkammer 14 befindet sich ein Absperrelement 30. Das Absperrelement 30 weist allgemein einen Absperrkörper 32 und ein Absperrsegment 34 auf. Das Absperrsegment 34 ist in einen Absperrbereich 35 mit einer nach außen weisenden Absperrfläche und in zwei Ansatzstücke 50 mit jeweils einer Außenfläche unterteilt. Die beiden Ansatzstücke 50 sind jeweils beidseitig des Absperrbereichs 35 vorgesehen. Mittels der Absperrfläche ist es möglich, eine der als Einlass dienenden Öffnungen an den Rohrleitungsanschlüssen 18, 22 ganz zu bedecken, so dass die Rohrleitungsanschlüsse 18, 22 wechselweise vollkommen verschlossen sind. Die beiden Ansatzstücke 50 dienen zur Verringerung des Durchmessers der Öffnungen 15.

Die Größe des Absperrbereichs 35 und die Größe der Ansatzstücke 50 sind so gewählt, dass in wenigstens einem Betriebszustand eine der Öffnungen 15 mittels des Absperrbereichs 35 vollständig verschlossen ist und eine benachbarte Öffnung 15 vollständig von einem Ansatzstück 50 bedeckt ist.

Um wechselweise beide Rohrleitungsanschlüsse 18, 22 zu verschließen, ist das Absperrelement 30 drehbar um die Längsachse der zylindrischen Mischkammer 14 gelagert.

Der Absperrkörper 32 verfügt über zwei unter einem Winkel angeordnete Anströmflächen 42, wobei sich die beiden Anströmflächen 42 jeweils radial nach außen erstrecken. Der Winkel zwischen den beiden Anströmflächen 42 beträgt etwa 90°. Die Absperrfläche und die beiden Anströmflächen 42 bilden im Querschnitt einen Kreissektor.

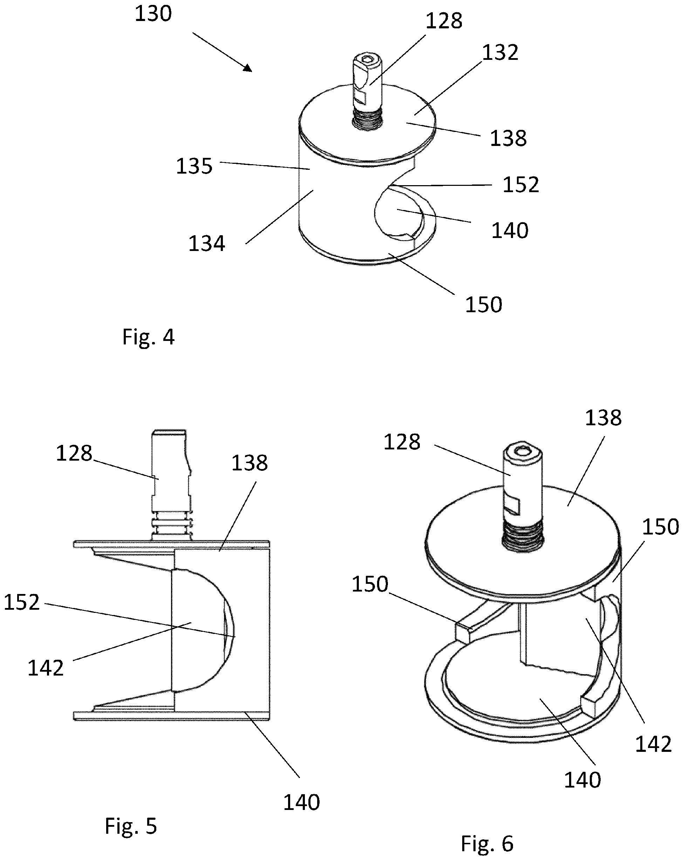

Die Figuren 4 bis 6 zeigen eine erste Ausführungsform eines Absperrelements 130. Das Absperrelement 130 umfasst einen Absperrkörper 132 und ein Absperrsegment 134 mit einer Absperrfläche 135. Der Absperrkörper 132 umfasst wiederum eine obere Abdeckscheibe 138 und eine untere Abdeckscheibe 140. Die obere Abdeckscheibe 138 und die untere Abdeckscheibe 140 sind parallel zueinander ausgerichtet und im Abstand voneinander angeordnet. Sie weisen beide den gleichen Radius auf. An der oberen Abdeckscheibe 138 ist ein Stift 128 senkrecht zur oberen Abdeckscheibe 138 befestigt und bildet eine Verlängerung der Drehachse des Absperrelements 130.

Wie in den Figuren 5 und 6 zu erkennen ist, befinden sich zwischen der oberen Abdeckscheibe und der unteren Abdeckscheibe die Anströmflächen 142, die senkrecht zu der oberen Abdeckscheibe 138 und der unteren Abdeckscheibe 140 ausgerichtet sind. Insbesondere bestehen die Anströmflächen 142 aus zwei Platten, die sich ausgehend von der Drehachse radial nach außen erstrecken und zwischen sich einen Winkel ausbilden.

Das Absperrsegment 134 ist als gebogenes halbkreisförmiges Plattenelement ausgebildet, wobei der Radius des Absperrsegments 134 an den Radius der oberen Abdeckscheibe 138 und der unteren Abdeckscheibe 140 angepasst ist, so dass die Außenseite 144 des Absperrsegments 134 flächenbündig zum Rand der oberen Abdeckscheibe 138 und der unteren Abdeckscheibe 140 ist.

Das Absperrsegment 134 umfasst den Absperrbereich 135 mit einer Absperrfläche sowie zwei Ansatzstücke 150 mit jeweils einer Außenfläche. Die beiden Ansatzstücke 150 sind in Umfangsrichtung des Absperrsegments 134 beidseitig des Absperrbereichs 135 angeordnet. In Umfangsrichtung weisen die beiden Ansatzstücke 150 zusammen in etwa die gleiche Länge auf wie der Absperrbereich 135, wobei die Absperrfläche und die Außenfläche flächenbündig ineinander übergehen. Der Absperrbereich 135 deckt etwa einen Winkelbereich von 90° ab, kann sich aber auch über einen etwas größeren oder kleineren Bereich erstrecken, wie etwa 80° bis 100°.

Jedes Ansatzstück 150 weist eine freie Seite auf, in der eine kreisbogenförmige Aussparung 152 vorgesehen ist. Die Aussparung 152 weist einen kleineren Radius auf als die Öffnung 15 in dem Gehäuse 12, so dass die Aussparung 152 die Öffnung 15 des Gehäuses 12 teilweise verschließt. Hierdurch kann beispielsweise der Kv-Wert einer Armatur reduziert werden.

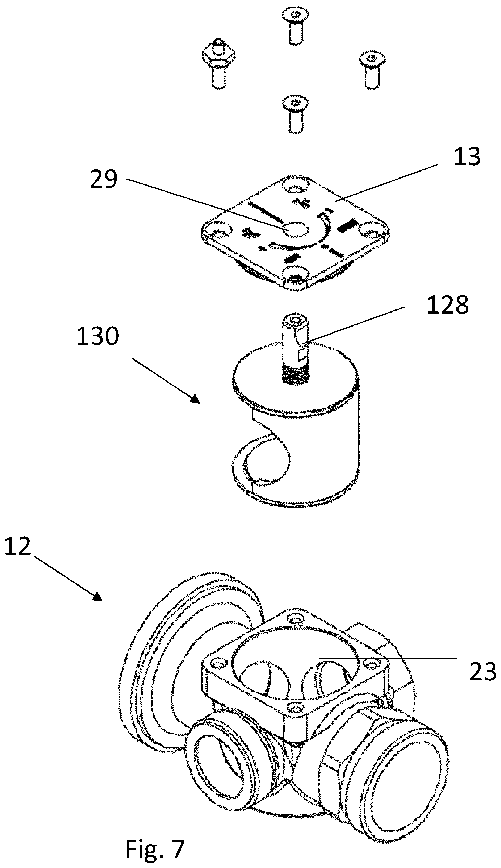

In Figur 7 ist die prinzipielle Montage des in den Figuren 3 bis 5 dargestellten Absperrelements 130 in ein Gehäuse 12 gezeigt. Das Absperrelement 130 wird durch die Öffnung 23 in die Mischkammer 14 des Gehäuses 12 eingesetzt, so dass der Stift 28 aus der Öffnung 23 hinausragt. Der Außenradius des Absperrelements 130 ist an den Innenradius der Mischkammer 14 angepasst, so dass das Absperrelement 130 dichtend an der Kammerwand der Mischkammer 14 anliegt. Der Außenradius des Absperrelements 130 ist somit gleich dem Innenradius der Mischkammer 14. Die Drehachse des Absperrelements 130 ist gleich der Längsachse der Mischkammer 14.

Die Öffnung 23 wird mittels des Aufnahmeelements 13 fest verschlossen, wobei der Stift 28 durch eine Bohrung 29 in dem Aufnahmeelement 13 aus dem Gehäuse 12 herausragt. Der Stift 28 kann entweder manuell mittels eines Hebels oder elektrisch mittels eines Motors gedreht werden, so dass das Absperrelement 130 in der Mischkammer 14 gedreht werden kann. Die Drehung des Absperrelements 130 kann sowohl im Uhrzeigersinn als auch gegen den Uhrzeigersinn erfolgen, so dass das Absperrelement verschiedene Betriebspositionen einnehmen kann.

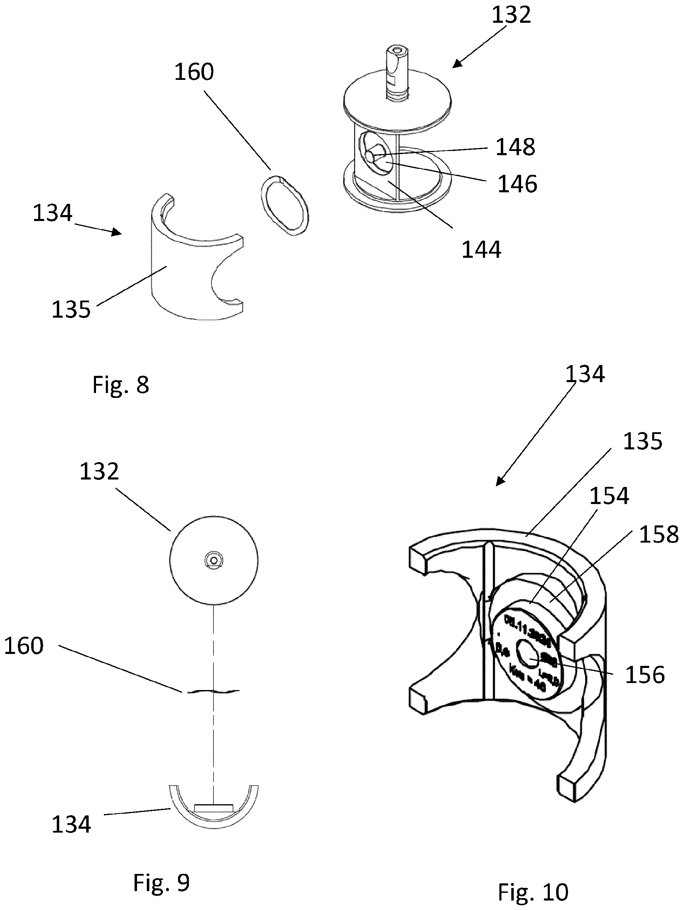

Die Figuren 8 und 9 zeigen das Absperrelement 130 in einer zerlegten Darstellung. In Figur 8 sind die Bestandteile des Absperrelements 130 in einer perspektivischen Ansicht gezeigt und in Fig. 9 ist das Absperrelement 130 in einer Ansicht von oben zu erkennen.

Der Absperrkörper 132 und das Absperrsegment 134 des Absperrelements 130 sind als getrennte Bauteile ausgebildet, wobei zwischen Absperrkörper 132 und Absperrsegment 134 ein Rückstellelement, insbesondere ein Federelement in Form einer kreisförmigen Wellenfeder 160 vorgesehen ist. Bei der Wellenfeder 160 handelt es sich um eine Druckfeder.

An dem Absperrkörper 132 ist zwischen den beiden Anströmflächen 142 eine Wand 144 vorgesehen, so dass die Anströmflächen 142 und die Wand 144 im Querschnitt ein Dreieck bilden, wobei insbesondere ein Dreieck mit zwei gleich langen Seiten, die von den Anströmflächen 142 gebildet werden, entsteht. In der Wand 144 befindet sich eine kreisförmige Vertiefung 146, in der wiederum ein Pin 148 vorgesehen ist, der aus der Vertiefung 146 herausragt und in radialer Richtung des Absperrkörpers 132 nach außen weist.

Auf der der Absperrfläche entgegengesetzt liegenden Innenseite des Absperrsegments 134 ist komplementär zu der Vertiefung 146 und dem Pin 148 des Absperrkörpers 132 im Absperrbereich 135 eine kreisförmige Erhebung 154 mit einer Bohrung 156 im Zentrum der Erhebung 154 vorgesehen. Weiterhin befindet sich um die kreisförmige Erhebung 154 eine kreisförmige Anschlagfläche 158. Die kreisförmige Erhebung 154 zusammen mit der Bohrung 156 wechselwirken mit der Vertiefung 146 und dem Pin 148 des Absperrkörpers 132, so dass zwischen dem Absperrkörper 132 und Absperrsegment 134 im montierten Zustand eine Steckverbindung ausgebildet ist. Das Absperrsegment 134 ist dadurch in radialer Richtung gegenüber dem Absperrkörper 132 beweglich, insbesondere verschiebbar. Im montierten Zustand befindet sich zwischen der Anschlagfläche 158 und der Wand 144 die Wellenfeder 160, deren Durchmesser an den Durchmesser der Anschlagfläche 158 angepasst ist. Der Durchmesser der Anschlagfläche 158 und somit der Wellenfeder 160 ist möglichst groß gewählt, so dass die Wellenfeder durchgehend am Rand der Absperrfläche angreift.

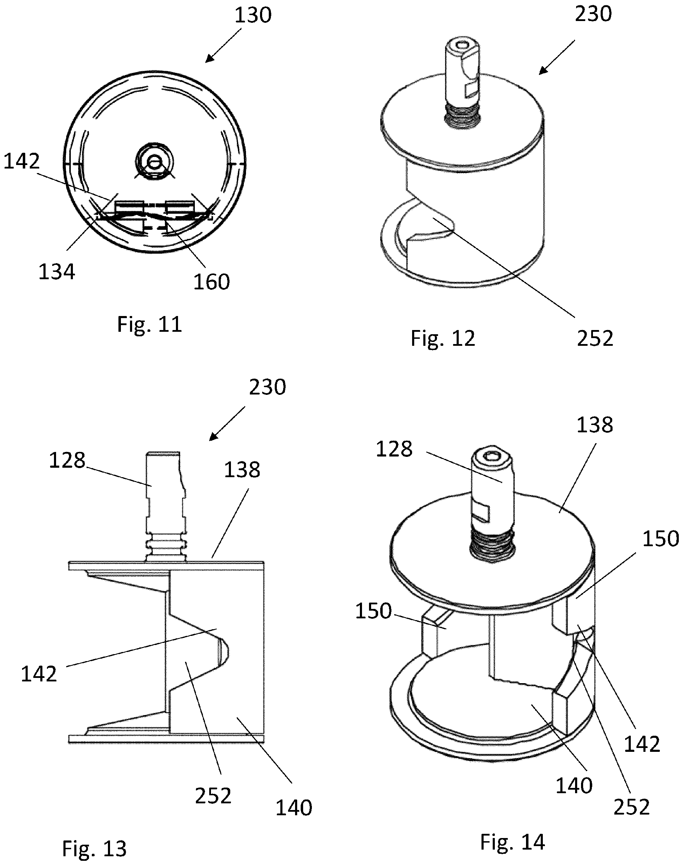

In Fig. 11 ist die Lage der Wellenfeder 160 im montierten Zustand gezeigt.

In den Figuren 12 bis 14 ist eine weitere Ausführungsform eines Absperrelements 230 gezeigt. Das in den Figuren 12 bis 14 dargestellte Absperrelement 230 unterscheidet sich von dem in den Figuren 3 bis 5 dargestellten Absperrelement 130 dadurch, dass die Aussparung 252 eine kleinere Fläche aufweist als bei der in den Figuren 3 bis 5 dargestellten Ausführungsform. Die übrigen Bauteile entsprechen denen der in den Figuren 3 bis 5 dargestellten Ausführungsform. Anstelle der kreisbogenförmigen Aussparung 152 in den Figuren 3 bis 5 ist insbesondere eine V-förmige Aussparung 252 vorgesehen. Mithilfe dieser in den Figuren 12 bis 14 dargestellten Ausführungsform kann der Kvs-Wert des Drei-Wege-Mischers 10 noch weiter reduziert werden.

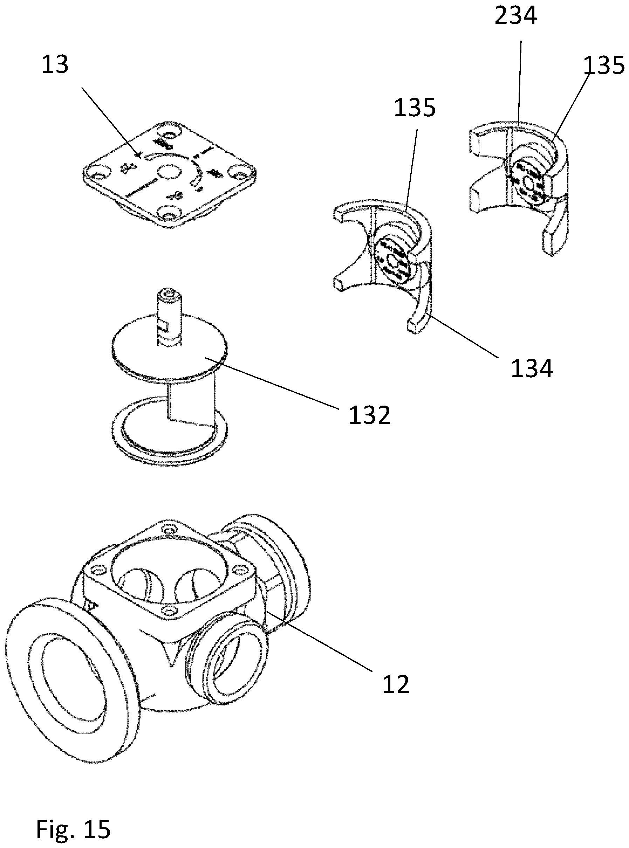

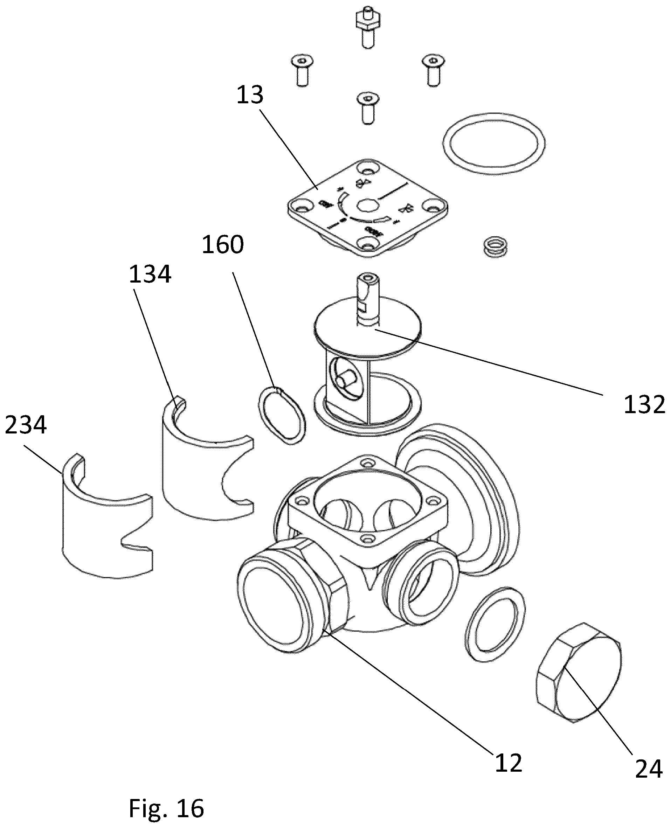

Wie insbesondere die Figuren 15 und 16 zeigen, sind die Innenseiten der Absperrsegmente 134 und 234 im Absperrbereich 135 gleich ausgebildet und insbesondere gleich dimensioniert, so dass beide Absperrsegmente 134 und 234 mit der Vertiefung 146 und dem Pin 148 des Absperrkörpers 132 zur Ausbildung einer Steckverbindung wechselwirken können. Die Absperrsegmente 134 und 234 können somit gegeneinander ausgetauscht werden.

Mittels der austauschbaren Absperrsegmente 134 und 234 ist es möglich unter Beibehaltung des Gehäuses 12 einen Armaturensatz bereitzustellen.

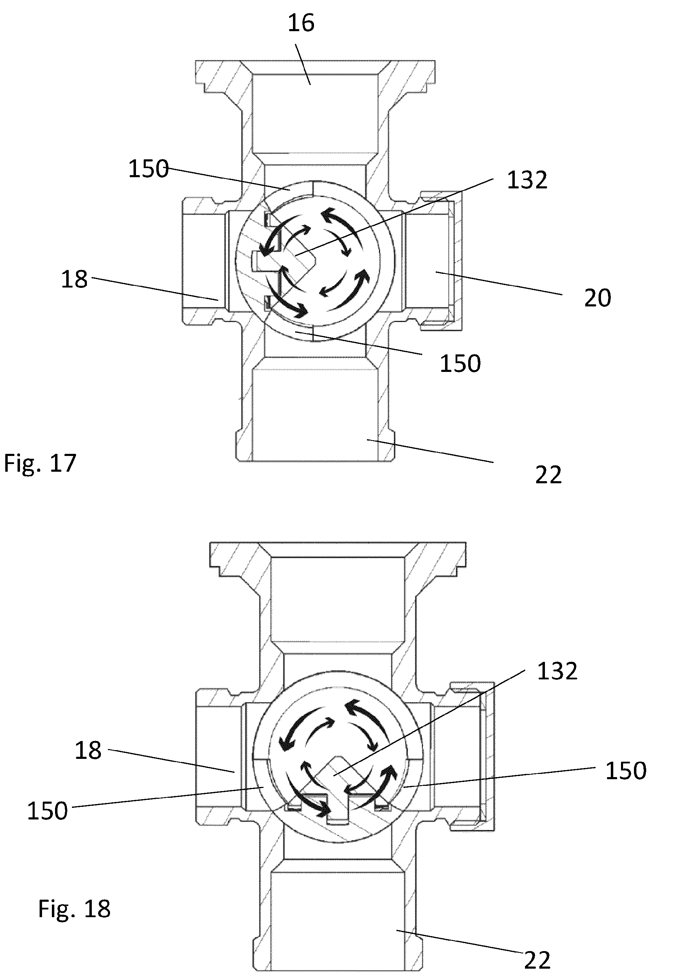

In den Figuren 17 und 18 sind zwei verschiedene Betriebszustände gezeigt. Bei dem in Figur 17 dargestellten Betriebszustand ist die Öffnung am Anschluss 22 verschlossen und bei dem in Figur 18 dargestellten Betriebszustand ist die Öffnung am Anschluss 18 verschlossen. Eines der beiden Ansatzstücke 150 ragt in den jeweils geöffneten Anschluss und verringert dadurch den Durchmesser der Öffnung 15. So ragt ein Ansatzstück 150 in den Anschluss 18, wenn der Anschluss 22 verschlossen ist. Das andere Ansatzstück 150 ragt in den Anschluss 22, wenn der Anschluss 18 verschlossen ist. Hierdurch kann die Durchflussrate und somit der Kv-Wert des Drei-Wege-Mischers verändert werden.

Das Absperrelement 132 kann sowohl in die Uhrzeigerrichtung als auch gegen die Uhrzeigerrichtung gedreht werden, um von einem Betriebszustand in den anderen zu gelangen.

In jedem Betriebszustand drückt die Wellenfeder 160 das Absperrsegment 134 gegen die Kammerwand des Gehäuses 12, so dass die Absperrfläche des Absperrsegments 134 immer möglichst eng an der Kammerwand des Gehäuses 12 anliegt. Das Absperrelement 130 befindet sich in einer ersten Stellung, nämlich dem Grundzustand, in der das Absperrsegment 134 und der Absperrkörper 132 einen ersten Abstand zueinander aufweisen.

Befinden sich beispielsweise Verunreinigungen an der Kammerwand des Gehäuses 12, so wird bei einer Drehbewegung das Absperrsegment 134 gegen den Absperrkörper 132 gedrückt. Das Absperrelement 130 befindet sich nun in einer zweiten Stellung, in der das Absperrsegment 134 und der Absperrkörper 132 einen zweiten Abstand zueinander aufweisen, der kleiner als der erste Abstand der Grundstellung ist. In dieser zweiten Stellung kann das Absperrelement 134 die Stelle mit der Verunreinigung an der Kammerwand des Gehäuses 12 passieren. Nachdem das Absperrelement 130 die Stelle mit der Verunreinigung passiert hat, drückt die Wellenfeder 160 das Absperrsegment 134 radial nach außen in Richtung Kammerwand des Gehäuses 12, so dass das Absperrsegment 134 wieder möglichst nahe an der Kammerwand des Gehäuses 12 anliegt und somit das Absperrelement 130 in den Grundzustand zurückkehrt.

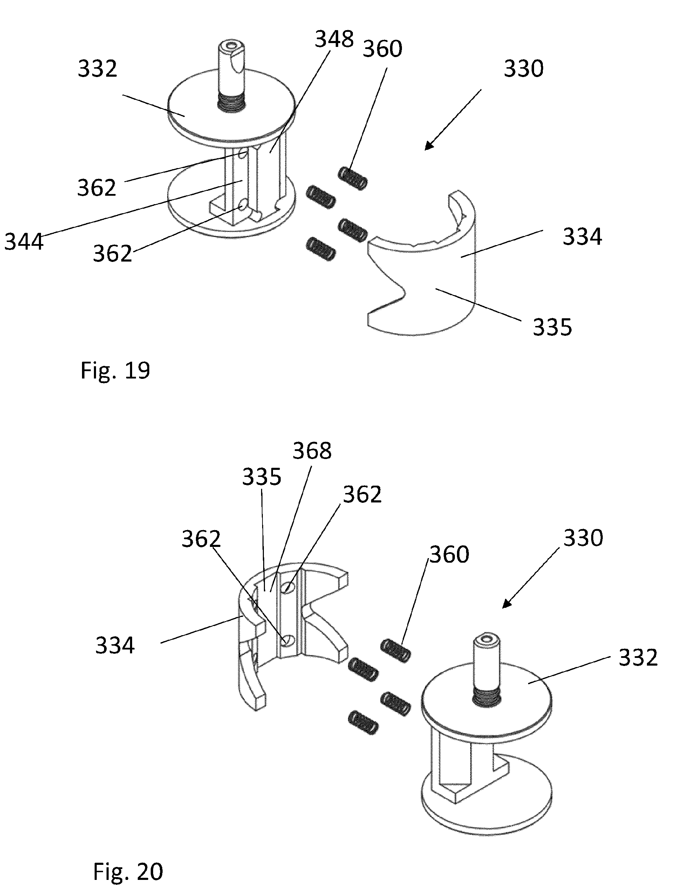

In den Figuren 19 und 20 ist eine alternative Ausführungsform eines Absperrelements 330 gezeigt, bei der das Absperrsegment 334 lösbar mit dem Absperrkörper 332 verbunden ist. Bei dieser Ausführungsform sind als Rückstellelement vier Druckfedern 360 in Form von Spiralfedern vorgesehen. Hierfür sind sowohl auf der Innenseite des Absperrsegments 334 im Absperrbereich 335 des Absperrfläche als auch auf der Wand des Absperrkörpers 332 Bohrungen 362 vorgesehen, die die Druckfedern 360 jeweils aufnehmen. Die Bohrungen 362 befinden sich im Bereich der Ecken der Wand 344 bzw. des Absperrbereichs 335, um das Absperrsegment 334 möglichst gleichmäßig an die Kammerwand der Mischkammer anzudrücken.

Zur Ausbildung einer Verbindung zwischen dem Absperrsegment 334 und dem Absperrkörper 332 ist auf der Innenseite des Absperrsegments 334 im Absperrbereich 335 eine nutartige Vertiefung 368 und komplementär zu der nutartigen Vertiefung 368 auf der Wand 344 eine leistenförmige Erhöhung 348 vorgesehen. Sowohl die nutartige Vertiefung 368 als auch die Erhöhung 348 erstrecken sich parallel zur Drehachse des Absperrelements 330.

Bei nicht dargestellten Ausführungsformen wurden an dem Absperrelement die Ansätze weggelassen, so dass das Absperrsegment nur einen Absperrbereich aufweist.

Anstelle eines Gehäuses mit vier Öffnungen kann das Gehäuse mehr oder weniger Öffnungen umfassen. Beispielweise kann das Gehäuse nur drei Öffnungen aufweisen.

Im Rahmen der Erfindungen sind auch nicht dargestellte Ausführungsformen umfasst, bei denen einzelne Merkmale weggelassen oder in anderer Weise kombiniert wurden.

## Patentansprüche

1. Armatur, umfassend
ein Gehäuse (12) mit einer Kammer (14) im Inneren des Gehäuses (12), wobei die Kammer (14) eine Kammerwand aufweist, in der wenigstens zwei Öffnungen (15) vorgesehen sind, und
ein Absperrelement (30; 130; 230; 330), das im Inneren der Kammer (14) drehbar gelagert und ausgelegt ist, wenigstens eine Öffnung (15) der wenigstens zwei Öffnungen (15) zumindest abschnittsweise zu verschließen, wobei das Absperrelement (30; 130; 230; 330) einen Absperrkörper (32; 132; 332) und ein Absperrsegment (34; 134; 234; 334) mit einer Absperrfläche aufweist, **dadurch gekennzeichnet** das Absperrsegment (34; 134; 234; 334) beweglich mit dem Absperrkörper (32; 132; 332) verbunden ist.

2. Armatur nach Anspruch 1, **dadurch gekennzeichnet, dass** zwischen Absperrkörper (32; 132; 332) und Absperrsegment (34; 134; 234; 334) wenigstens ein Rückstelleelementvorgesehen ist.

3. Armatur nach Anspruch 2, **dadurch gekennzeichnet, dass** das wenigstens eine Rückstellelement ein Federelement ist, wobei das Federelement vorzugsweise ein oder mehrere Druckfedern umfasst.

4. Armatur nach Anspruch 2, **dadurch gekennzeichnet, dass** das wenigstens eine Rückstellelement ein elastisches Bauteil aus einem Elastomer ist.

5. Armatur nach einem der vorhergehenden Ansprüche, **dadurch gekennzeichnet, dass** der Absperrkörper (32; 132; 332) und das Absperrsegment (34; 134; 234; 334) lösbar, insbesondere mittels einer Steckverbindung miteinander verbunden sind.

6. Armatur nach einem der vorhergehenden Ansprüche, **dadurch gekennzeichnet, dass** die Kammer (14) eine zylinderförmige Grundform und das Absperrelement (30; 130; 230; 330) eine Absperrfläche mit einem kreisbogenförmigem Querschnitt aufweisen.

7. Armatur nach einem der vorhergehenden Ansprüche, **dadurch gekennzeichnet, dass** das Absperrsegment (34; 134; 234; 334) die Grundform einer gebogenen Platte aufweist.

8. Armatur nach einem der vorhergehenden Ansprüche, **dadurch gekennzeichnet, dass** das Absperrelement (30; 130; 230; 330) Anströmflächen (42; 142) aufweist.

9. Armatur nach Anspruch 8, **dadurch gekennzeichnet, dass** die Anströmflächen (42; 142) und die Absperrfläche im Querschnitt einen Kreissektor bilden.

10. Armatur nach einem der vorhergehenden Ansprüche, **dadurch gekennzeichnet, dass** das Absperrsegment (34; 134; 234; 334) einen Absperrbereich (35; 135) mit einer Absperrfläche und wenigstens ein Ansatzstück (50; 150) aufweist, das sich seitlich über den Absperrbereich (35; 135) hinaus erstreckt, wobei in dem Ansatzstück (50; 150) eine Aussparung (52; 152; 252) vorgesehen ist.

11. Armatur nach Anspruch 10, **dadurch gekennzeichnet, dass** die wenigstens zwei Öffnungen (15) des Gehäuses (12) jeweils eine Öffnungsfläche und die Aussparung (52; 152; 252) eine Aussparungsfläche aufweisen, wobei wenigstens eine Öffnungsfläche größer ist als die Aussparungsfläche.

12. Armatur nach einem der Ansprüche 10 oder 11, **dadurch gekennzeichnet, dass** die Aussparung ein Durchgang in dem Ansatzstück ist.

13. Armatur nach einem der Ansprüche 10 oder 11, **dadurch gekennzeichnet, dass** das Ansatzstück (50; 150) eine freie Seite aufweist und die Aussparung (52; 152; 252) eine Vertiefung ist, die in die freie Seite mündet.

14. Armatur nach einem der Ansprüche 10 bis 13, **dadurch gekennzeichnet, dass** das wenigstens eine Ansatzstück (50; 150) eine Außenfläche aufweist, deren Kontur komplementär zu der Kontur der Kammerwand des Gehäuses (12) ausgebildet ist.

15. Armatur nach einem der Ansprüche 10 bis 14, **dadurch gekennzeichnet, dass** ein erstes Ansatzstück und ein zweites Ansatzstück vorgesehen sind, wobei das erste Ansatzstück an einer ersten Seite der Absperrfläche sich seitlich über die Absperrfläche hinaus erstreckt und das zweite Ansatzstück an einer der erste Seite entgegengesetzt liegenden zweiten Seite sich über die Absperrfläche hinaus erstreckt.
